# EUROPEAN PATENT SPECIFICATION

(11) **EP 1 416 839 B1**
(45) Date of publication and mention of the grant of the patent: **09.03.2005**
(21) Application number: 02787174.8
(22) Date of filing: 18.07.2002
(51) Int. Cl.: A47J 37/04

(54) **ROASTING APPARATUS FOR CHICKEN AND SIMILAR PRODUCTS**
BRATVORRICHTUNG FÜR HÜHNCHEN UND ÄHNLICHE PRODUKTE
ROTISSOIRE POUR POULETS ET PRODUITS SIMILAIRES

(30) Priority: 18.07.2001 TR 200102064
(43) Date of publication of application: 12.05.2004
(73) Proprietor: Inoksan Mutfak Sanayi Ve Ticaret A.S., 16159 Bursa (TR)
(72) Inventor: IRFAN, Nuri, Coskun, 16159 Bursa (TR); VARLIK, Vehbi, 16159 Bursa (TR)
(74) Representative: Gürsoy, Mehmet Bahadir
(86) International application number: PCT/TR2002/000034
(87) International publication number: WO 2003/007765

(56) References cited:
- EP-A- 0 872 203
- DE-A- 19 836 839
- GB-A- 839 068
- US-A- 4 409 452
- US-A- 5 473 977
- US-A- 5 560 285
- US-B1- 6 170 390

## Description

### Technical Field

The present invention relates to a "spitted chicken roasting apparatus", wherein products to be roasted/cooked are strung or fitted to spits arranged on a drum or said products are put into baskets; said drum makes a rotational movement; and said spits make/do not make an axial rotation depending on the type of roasting performed.

The present invention is particularly focused on fastening said products to be roasted to a drum, preventing steam that emerges during cooking from damaging relevant heat supplies, and on productively performing said roasting process to provide a soft, homogeneously cooked/roasted, and hygienic product, whatever the heat supply to be utilized may be (LPG, natural gas, electricity, etc.).

### Known Technique

Regarding the chicken roasting apparatus currently in use, electricity power or LPG (Liquefied Petroleum Gas) are being generally used as a heat supply. Turbo chicken roasting apparatuses where the liberated heat is compulsorily distributed within the roasting chamber are also known.

Regarding an apparatus where LPG is used for roasting purposes, a combustion unit (burner) that is obtained from a pipe is positioned somewhere under the apparatus within the roasting chamber or radiant heaters are assembled onto the ceiling part of the apparatus.

Regarding an apparatus where roasting is performed with the use of LPG, air required for primary burning is supplied uncontrollably through the openings on the covers of said apparatus. As for the gases such as carbon dioxide, carbon monoxide, and nitrogen dioxide, they remain also uncontrolled within the roasting chamber. Flames sometimes go out as the air required for burning finishes in the roasting chamber. Similarly, the gas -which is liberated as a result of combustion-remains uncontrolled in the roasting chamber and makes toxic the product to be roasted. In current turbo chicken roasting apparatuses that make use either of electricity energy or of LPG (Liquefied Petroleum Gas), or that benefit from compulsory heat distribution process for roasting purposes, products to be roasted are arranged on spits or baskets positioned on a drum. Said arranging process of a linear style is performed by fastening said chickens with specifically formed fastening means that consist of multiple elements. As this fastening process is performed on uncooked products, said fastenings loosen due to melts that form during roasting. As a result of this loosening, said products stop making axial rotations. As a result of this loosening, whilst a side of a product is cooked, the other remains uncooked. And whilst a cooked product is removed from the cooking medium for another uncooked one to be placed therein, heat losses and uncomfortable handling do occur.

In a roasting apparatus with both electricity and LPG and turbo capacity, steam and fat that emerge during cooking retain on parts located on upper part of said apparatus and make it difficult to clean and maintain it. Also, as the product to be roasted is exposed directly to heat liberated from a heat supply, their exterior becomes roasted, while their interior remain uncooked.

In addition, unburned gases that are discharged to the cooking medium from radiant heaters in especially gaseous apparatuses are subjected to a second combustion process (secondary combustion). Thus, carcinogenic gases such as CO, CO₂ and NO_{X} are liberated into the cooking medium.

### Brief Description of Invention

From this point of view of the technique, the present invention aims the following purposes in apparatuses wherein roasting processes are achieved by making use either of gas (LPG, natural gas, etc.) or of electrical energy: product to be roasted is fastened in a stable manner especially in gaseous roasting styles; air required for burning is obtained from the outer medium and gases liberated after combustion are removed from the roasting chamber; a convex shaped protection is provided; heat is distributed homogeneously; and unburned gases are subjected to a secondary burning process by means of a secondary burning glass before they enter into the cooking chamber.

Another objective of this invention is to practically place and fasten the products to be roasted to spits or into baskets without necessitating any extra accessories, whereby said products are homogeneously roasted as they rotate around a common axis and around their own-axes; to prevent said products to move around the spit due to melts formed during roasting; to provide a practical fit-and-removal for the spits whereto said products to be roasted are fastened. Except the part wherein the bearings are assembled, all the other parts of the drum of which their details are given in the attached figures are easily removed, washed, and cleaned.

Another objective of the present invention is to obtain the air that is required for burning in the gas-consuming energy supplies from the exterior medium and to remove the toxic or nontoxic gases that are liberated by combustion from the roasting chamber. In exactly this manner, the toxigenisity possibly to arise from these products are removed as well.

Another objective of the present invention in especially gas consuming apparatuses is to burn the gases that enter into the cooking chamber by means of a secondary burning process. In electrified and especially gaseous systems, radiant heaters arranged in a certain angle provide the most ideal burning output.

Another object of this invention in roasting embodiments that are heated either with electrical energy or with gaseous energy is to prevent the negative affects of some heat-originated elements such as fat and steam that emerge during roasting from damaging the roasting equipment and mechanical parts of the apparatus and to ensure an easy cleaning.

In order to reach the aforementioned targets and objectives, the structure of the drum that performs a rotational motion by means of a planet gear mechanism and the structure of the spits that are arranged on said drum and perform a rotational motion around themselves are altered. Regarding the turbo roasting apparatus where heat is compulsorily distributed, spits are not desired to rotate around their own-axes. Therefore the spits in this kind of apparatus do not make axial rotations. Baskets are utilized in place of these spits. A clamping element is formed on the spit, this element extending parallel to the spit and having a high movement capability. A stopper is-used limiting the movement of said clamping element. A grooved construction is formed to provide an easy fastening and removal of said spits to and from the drum.

In particularly the embodiments that consume gas for heat supply, a duct is formed to prevent burned gases from retaining on the product being cooked, to provide fresh air into the cooking chamber for primary and secondary combustion, and to take off burned gases to the outer medium. Fresh-air intake orifices of an adequate number are formed on side walls, lower table, and on both covers constituting the subject apparatus. Air intake channels are formed also on the ceiling and above the radiant heaters that are arranged with a 135° angle to ensure a powerful inhale force for the duct construction and to realize a healthy circulation.

A layer is formed and assembled in front of the heat supplies in order to prevent said heat supplies from the liberated steam and to obtain a secondary burning process. The circular shape of the glass protector provides an equal distance between the heat supply and the roasted products that are placed circularly on said drum.

The objectives, characteristics, and benefits of the subject invention shall be better understood by referring to annexed figures, which are given for illustration purposes only.

### Brief Description of Figures

Figure 1 gives a perspective view of the disassembled apparatus that benefits from gas energy for heat production.
Figure 2 gives a perspective view of the disassembled apparatus that benefits from electrified heating blocks.
Figure 3 gives a perspective view of the disassembled turbo roasting apparatus where heat obtained from a electrified heater is compulsorily circulated into the roasting chamber by means of a fan.
Figure 4 gives a perspective view of the product fastener (1.1) and the transmission bar (1.6) that transmits the movement between the main drum (1.4) and the auxiliary drum (1.5).
Figure 4a gives a perspective view showing details of the fastening part (1.2) that is referred within Figure 4 with detail-A. Figures 4b and 4c give perspective views of -B- and -C- details on Figure 4.
Figure 5 gives a side view of the gaseous roasting apparatus of which the disassembled perspective view is given in Figure 1.
Figure 6 gives a side view of the electrified roasting apparatus of which the disassembled perspective view is given in Figure 2.
Figure 7 gives a side view of the turbo roasting apparatus which compulsorily circulates the heat and of which the disassembled perspective view is given in Figure 3.

### Reference Numbers

### 1. Fastening mechanism;

- 1.1: Product fastener;
- 1.2: Fastening element,
- 1.3: Planet gear mechanism;
- 1.4: Main drum;
- 1.5: Auxiliary drum;
- 1.6: Transmission bar;
- 1.7: Fastening slots;
- 1.8: Auxiliary slots;
- 1.9: Fastening element;
- 1.10: Connection means;
- 1.11: Sharp part;
- 1.12: Clamping element fastener;
- 1.13: Passage channel;
- 1.14: Passage cavity;
- 1.15: Placement part;
- 1.16: Extension;
- 1.17: Fastening part;
- 1.18: Motion transmission construction;
- 1.19: Head;
- 1.20: Adapter,
- 1.21: Adapter passage cavity;
- 1.22: Adapter slot;
- 1.23: Branches;
- 1.24: Central element;
- 1.25: Sheet type springs;
- 1.26: Stopper element;

### 2. Dispatching and transferring construction;

- 2.1: Roasting chamber;
- 2.2: Fresh air dispatched;
- 2.3: Burned gases;
- 2.4: Base plate;
- 2.5: Side wall plates;
- 2.6: Front wall plates;
- 2.7: Dispatching channels;
- 2.8: Motor,
- 2.9: Chamber;
- 2.10: Side walls;
- 2.11: Front walls;
- 2.12: Base section of front walls;
- 2.13: Handle;
- 2.14: Glass panes;
- 2.15: Cover's base element;
- 2.16: Base section;
- 2.17: Elevated section;
- 2.18: Vacuuming construction;
- 2.19: Direction duct;
- 2.20: Exhausting duct;
- 2.21: Assembly surface;
- 2.22: Radiant element;
- 2.23: Separation surface;
- 2.24: Collection spot;
- 2.25: Elevation section;
- 2.26: Perpendicular projections
- 2.27: Base section;
- 2.28: Elevated section;
- 2.29: Side walls;
- 2.30: Container;
- 2.31: Reserve plates;
- 2.32: Connection element;
- 2.33: Radial fan;
- 2.34: Axial fan;
- 2.35: Electricity resistance;
- 2.36: Halogen lambs;

### 3. Steam retaining construction;

- 3.1: Electrified heating block;
- 3.2: Protector (radian cage structure or seran glass pane);
- 3.3: Convex curve;
- 3.4: Heat distribution surface;
- 3.5: Exhausting spot.

The invention and the details thereof shall be described in more details by referring to the annexed figures and reference numbers on the basis of an nonrestrictive exemplary embodiment.

### Detailed Description of Invention

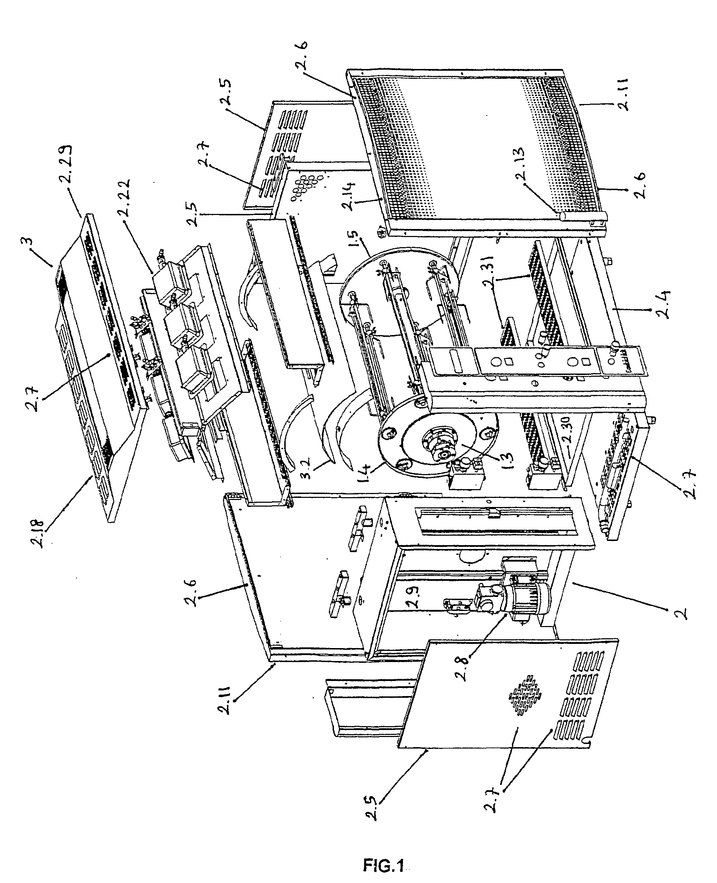

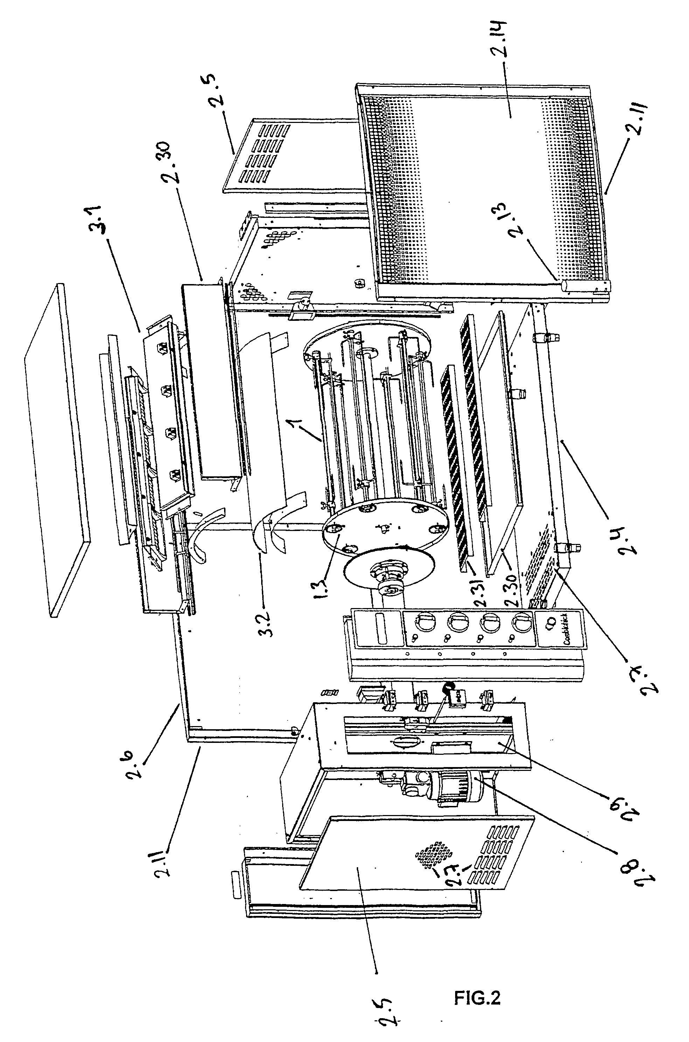

The present invention consists of three main parts. These are the product fastening construction (1) utilized in apparatuses as shown in Figures 1 and 2 that especially consumes gas or electricity for heat supply, the oxygen transmittal and burned gas transfer construction (2), and the soft and homogeneous cooking, steam-fat retaining construction (3).

Figure 1 gives a perspective view of a disassembled gas-burning apparatus showing all the three constructions (1, 2, 3). the product fastening construction (1) is formed by means of a planet gear mechanism (1.3) that is also used in the known technique. Rotation of the main drum (1.4) and also of the axially rotating product fastening elements (1.1) in an optional number on said drum (1.4) are provided by means of the planet gear mechanism (1.3). Said rotation is transferred from the main drum (1.4) to the auxiliary drum by means of a transmission bar (1.6).

Figure 2 gives a perspective view of the disassembled apparatus that benefits from electrified heating blocks (3.1).

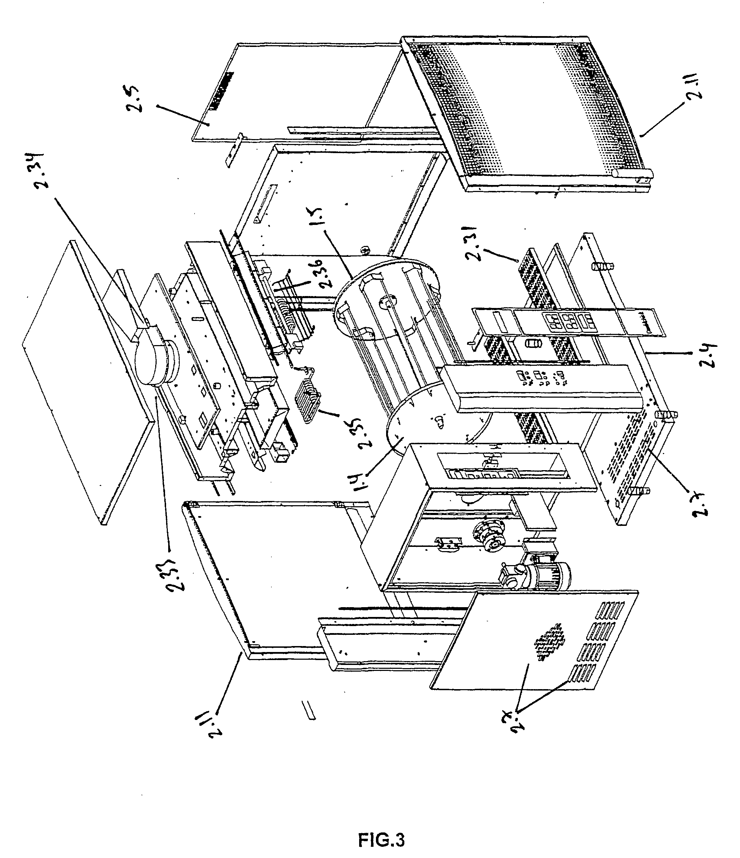

Figure 3 gives a perspective view of the disassembled turbo roasting apparatus where heat obtained from an electrified heater (3.1) is compulsorily circulated into the roasting chamber by means of a radial fan (2.33).

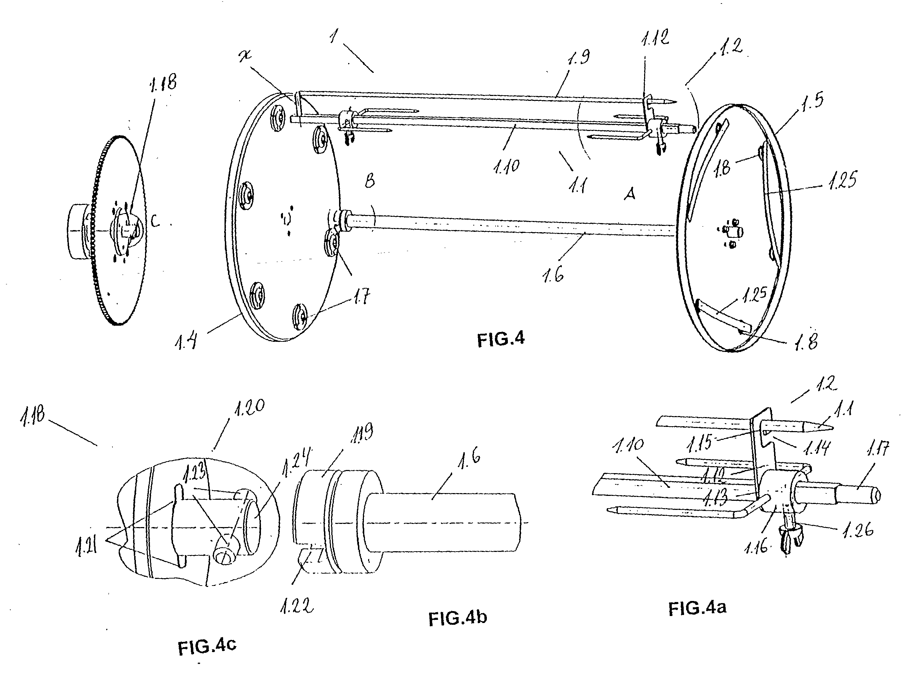

Figure 4 gives a perspective view of the assembled product fastener (1.1). Product fastening elements (1.1) are positioned between the fastening slots (1.7) and the auxiliary slots (1.8). The product fastening element (1.1) consists of a connection means and a clamping element (1.9) that are formed mutually parallel and have a (x) distance in-between. The clamping element (1.9) is capable to move in (y) and (-y) directions. A product is easily fastened to a product fastener (1.1) thanks to this motion capability. A sharp portion (1.11) is formed on the tip of the clamping element (1.9) to quickly and easily fasten a product. Said sharp portion (1.11) has a conic shape preferably.

Figure 4a gives a perspective view showing details of the fastening part (1.2) that is referred to detail-A within Figure 4. The fastening part (1.2) consists of a clamping element fastener (1.12) and an extension (1.16). A passage channel (1.13) is formed with a female structure of the cross-sectional area of the connection means (1.10) to position the clamping element fastener (1.12) to the connection means (1.10). The passage channel (1.13) has an extension (1.16) surrounding the connection means (1.10) and a positioning part (1.15) is formed contrary to said channel (1.13) to position the clamping element (1.9). A stopper element (1.26) is used to fix said part on the desired position in the extension (1.16) on the fastening part (1.2). A passage cavity (1.14) is formed to engage the claming element (1.9) to the positioning part (1.15). The positioning part (1.15) and the passage cavity (1.14) are obtained by emptying a side corner of the capsule opening.

A fastener part (1.17) is formed on the portion (1.2) where the connection means (1.10) is located on the auxiliary drum (1.5). The fastening part has a cylindrical (1.17) structure.

Figure 4 also gives a perspective view of the transmission bar (1.6) that transmits the motion between the main drum (1.4) and the auxiliary drum (1.5) and of the product fastener (1.1).

Figures 4b and 4c give perspective views of -B- and -C- details on Figure 4. This figure shows the motion transmission construction (1.18). Said motion transmission construction (1.18) contains a head (1.19) formed on the transmission bar (1.6) and an adapter (1.20) whereon said head (1.19) is engaged and that provides a rotational movement. Said adapter consists of a central element (1.24) and of branches (1.23) having certain elevation with respect to said central element (1.24). The adapter (1.20) is positioned on the main drum (1.4) by means of the adapter passage cavity (1.21) of the female form of the cross-sectional area that said branches (1.23) and central element (1.24) makes up.

Auxiliary slots (1.8) constituted on the auxiliary drum (1.5) are closed with sheet-type springs (1.25) from behind. Sheet-type springs (1.25) are always in contact with the fastening part (1.17) during operation and continuously push the connection means (1.10) to the fastening slots (1.7).

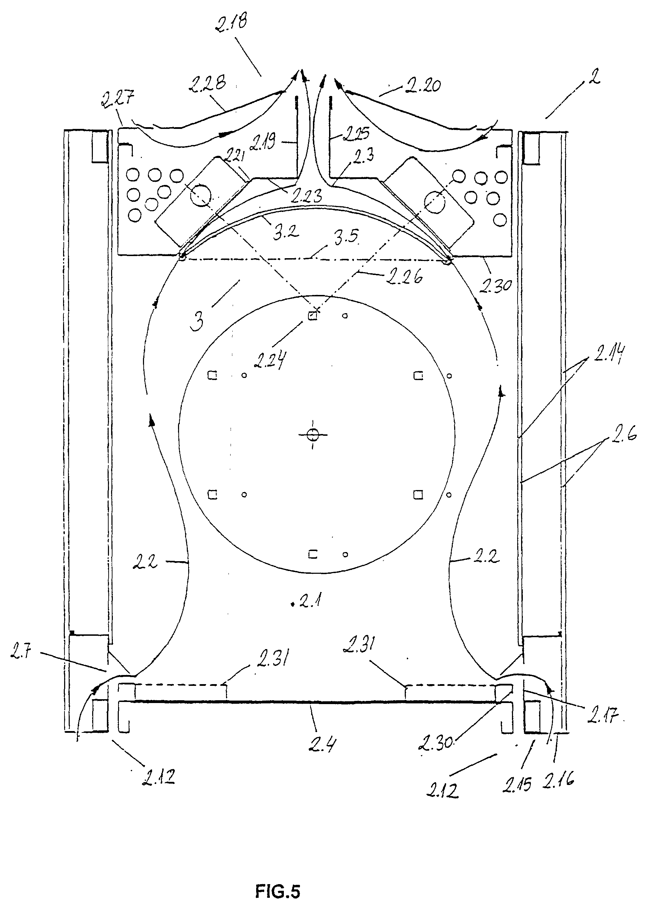

Figure 5 gives a side view of the gaseous roasting apparatus of which the disassembled perspective view is given in Figure 1. This figure also indicates the fresh air (2.2) (required for combustion) dispatched into the roasting chamber (2.1); gases (2.3) liberated after combustion; and the transferring structure (2) made up to provide a vacuum affect.

Air (2.2) is provided by means of dispatching channels (2.7) formed on the base plate (2.4), side-, and front-walls (2.5, 2.6) from the outer medium into the roasting chamber (2.1). An empty structure (2.9) is particularly formed between the side walls (2.10) whereto the rotation providing motor (2.8) is assembled to smoothly assemble said motor and to cool the electrical parts during operation. In exactly the same way, side and front walls (2.10, 2.11) are formed by using a couple of all side and front wall plates (2.5, 2.6). Interior of walls is like an emptied structure (2.9). Air continuously circulates within these parts.

The base plate (2.4) makes up an empty structure. The dispatching channels (2.7) formed on the base plate (2.4) direct fresh air into the side walls (2.10) where the motor (2.8) is positioned. Said dispatching channels are formed to take place on the base plate (2.4) of this empty structure (2.9).

An easily fastened/removable container (2.30) and reserve plates (2.31) can be placed on the base plate (2.4). Reserve plates (2.31) have a certain elevation and have some channels thereon that permit the fat on a cooked product to poor down on said container (2.30).

Front and rear walls (2.11) resemble the structure of covers. Said front walls (2.11) that are opened/closed by an handle (2.13) can either be opened from one or from both sides. Front walls (2.11) are designed as a double-window in order to keep the heat within the roasting chamber (2.1). Similarly, said glass panes (2.14) are opened/closed just like the covers (2.6). Thanks to their transparency, it is possible to sea how much said products are roasted. Fresh air (2.2) is delivered to the roasting chamber (2.1) through the front walls (2.11) by means of the door's base element (2.15). The door's base element (2.15) has a relatively angled base structure and an elevated part (2.16, 2.17). Fresh air (2.16, 2.17) enters first into the front walls (2.11) and then into the roasting chamber (2.1) by means of the dispatching channels (2.7) formed on said parts (2.16, 2.17).

Said dispatching channels (2.7) can especially have the forms shown in Figure 1 and in other geometric forms as well.

A vacuuming construction (2.18) is formed to exhaust the burned gases (2.3) and the consumed air entering into the roasting chamber (2.1). Said vacuuming construction (2.18) has a form of two ducts (2.19, 2.20) positioned one on another. Burned gases (2.3) collected in the roasting chamber (2.1) are repelled to the exhausting duct (2.20) by means of a direction duct (2.19).

The direction duct (2.19) consists of an assembly surface whereon radiant elements (2.22) with a certain angle in-between are fixed, separation surfaces (2.23) separating said assembly surfaces (2.21) from each other, and from an elevated portion transferring burned gases (2.3) to the exhausting duct (2.20). The angle (α) between the assembly surfaces (2.21) and the separation surfaces (2.23) are so that the product within the roasting chamber (2.1) and the perpendicular projections (2.26) on the radiant elements (2.22) are intersected at a collection spot (2.24). A homogeneous and productive roasting is obtained in this manner.

The exhausting duct (2.20) consists of a base portion (2.27), an elevated portion (2.28), and side walls (2.29). Dispatching channels (2.7) similar to other dispatching channels (2.7) that deliver air to roasting chamber (2.1) are formed on the base part (2.27). This way, burned gases (2.3) are continuously transferred from the roasting chamber (2.1). The relative positioning of the direction and exhausting ducts (2.19, 2.20) is provided by a connection element (2.30).

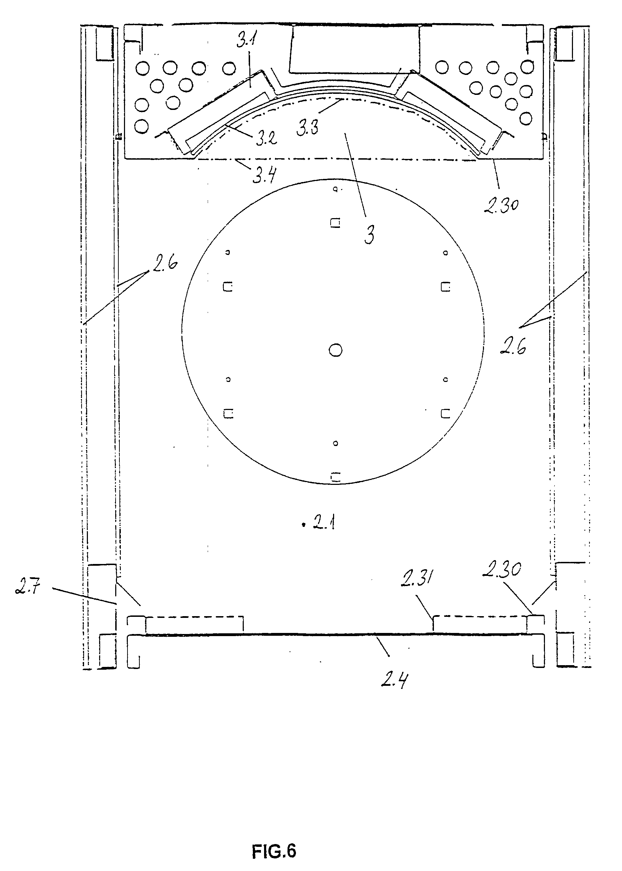

Figure 6 gives a side view of the electrified roasting apparatus of which the disassembled perspective view is given in Figure 2. A protective plate (3.2) which is preferably a glass pane is used to prevent both the electrified heating block (3.1) and the radiant elements (2.22) during a roasting process. With this plate (3.2), it is aimed to distribute the heat homogeneously and softly. Thanks to its circular structure, it forms a heat plate that has always an equal distance to the product being roasted. A secondary roasting process is also performed by means of said protective plate (3.2), and heat supplies are prevented from the steam that is liberated during a roasting process.

The protective plate (3.2) is formed in a shape of a convex curve (3.3). Said plate (3.2) is sized so that it covers the exhausting spot (3.5) in LPG and natural gas consuming apparatuses and the heat distribution surface (3.4) in electrified apparatuses.

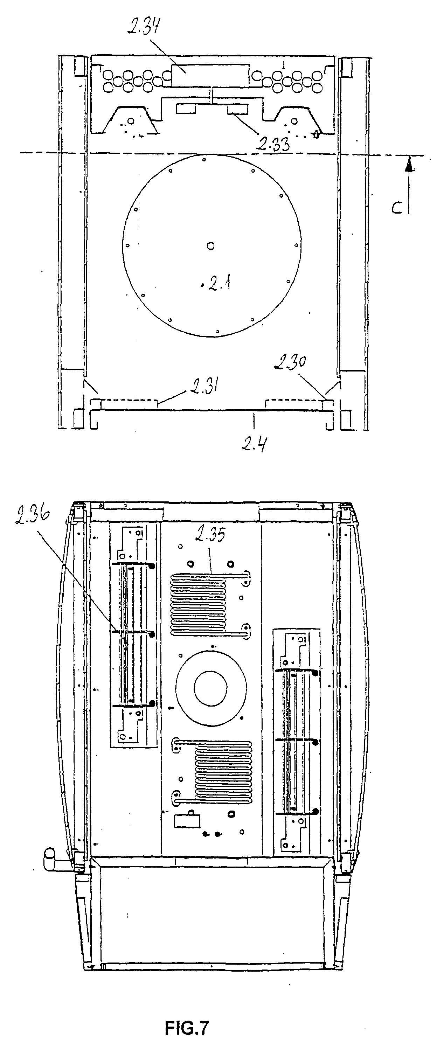

Figure 7 gives a side view of the turbo roasting apparatus which compulsorily circulates the heat and of which the disassembled perspective view is given in Figure 3. In this embodiment, heat is circulated within the roasting chamber (2.1) by a radial fan (2.33); whereas an axial fan (2.34) located at the upper part exhausts the heat that is liberated from heat supplies to the outer medium. Heat is obtained by electricity resistance elements (2.35). Halogen lambs (2.36) provide illumination and a certain heat gain.

The present invention is not restricted with the above mentioned examples. It is apparent that a skilled person can make various modifications on clamping a product to the product fastener (1.1); on exhausting burned gases and taking fresh air into the roasting chamber (2.1); on protective plate (3.2) embodiments to prevent probable damages of steam and burned gases (2.3) on heating equipment (2.22, 3.1); and on said protective plate or radiant cage structure (3.2), according to the appended claims.

## Claims

1. An apparatus for roasting chicken or similar products, comprising a heating element operable either by electricity resistance elements (2.35) or gaseous fuel radiant elements (2.22); a roasting chamber (2.1) comprising a fastening mechanism (1) having a clamping element (1.9) and a connection means (1.10), the products to be roasted are provided thereon **characterized in that** a protective plate (3.2) is provided between the heating element and the roasting chamber (2.1) for preventing the steam liberated during roasting, from damaging the heating element.

2. An apparatus according to claim 1, **characterized in that** the protective plate (3.2) is a glass pane.

3. An apparatus according to claim 1 or 2, **characterized in that** the protective plate (3.2) has a circular structure so that the distances between the product to be cooked and the protective plate (3.2) are always equal.

4. An apparatus according to anyone of the preceding claims, **characterized in that** the protective plate (3.2) has a shape of convex curve (3.2).

5. An apparatus according to anyone of the preceding claims, **characterized in that** the protective plate (3.2) covers an exhausting spot (3.5) when the heating element is operable by the gaseous fuel radiant elements (2.22).

6. An apparatus according to anyone of the preceding claims, **characterized in that** the protective plate (3.2) covers a heat distribution surface (3.4) when the heating element is operable by the electricity resistance elements (2.35).

7. An apparatus according to claim 1, **characterized in that** a clamping element fastener (1.12) is provided to the connection means (1.10) for detachably mounting of said clamping element (1.9) to the clamping element fastener (1.12).

8. An apparatus according to claim 1 and 7, **characterized in that** the clamping element fastener (1.12) comprises a passage cavity (1.14) to engage the clamping element (1.9).

## Patentansprüche

1. Vorrichtung zum Braten von Hähnchen oder ähnlichen Produkten, umfassend ein Heizelement, das entweder durch Stromwiderstandselemente (2.35) oder gasförmigen Brennstoff strahlende Elemente (2.22) betrieben wird; eine Bratkammer (2.1), umfassend einen Befestigungsmechanismus (1) mit einem Klemmelement (1.9) und einem Verbindungsmittel (1.10), wobei die zu bratenden Produkte darauf bereitgestellt werden, **dadurch gekennzeichnet, dass** ein Schutzblech (3.2) zwischen dem Heizelement und der Bratkammer (2.1) bereitgestellt ist, um den während des Bratvorgangs freigesetzten Dampf daran zu hindern, das Heizelement zu beschädigen.

2. Vorrichtung gemäß Anspruch 1, **dadurch gekennzeichnet, dass** es sich bei dem Schutzblech (3.2) um eine Glasscheibe handelt.

3. Vorrichtung gemäß Anspruch 1 oder 2, **dadurch gekennzeichnet, dass** das Schutzblech (3.2) über eine kreisförmige Struktur verfügt, sodass die Abstände zwischen dem zu kochenden Produkt und dem Schutzblech (3.2) stets gleichgroß sind.

4. Vorrichtung gemäß einem der vorstehenden Ansprüche, **dadurch gekennzeichnet, dass** das Schutzblech (3.2) die Form einer konvexen Kurve (3.2) hat.

5. Vorrichtung gemäß einem der vorstehenden Ansprüche, **dadurch gekennzeichnet, dass** das Schutzblech (3.2) einen Auslasspunkt (3.5) überdeckt, wenn das Heizelement durch die gasförmigen Brennstoff strahlenden Elemente (2.22) betrieben wird.

6. Vorrichtung gemäß einem der vorstehenden Ansprüche, **dadurch gekennzeichnet, dass** das Schutzblech (3.2) eine Wärmeverteilungsfläche (3.4) überdeckt, wenn das Heizelement durch die Stromwiderstandselemente (2.35) betrieben wird.

7. Vorrichtung gemäß Anspruch 1, **dadurch gekennzeichnet, dass** dem Verbindungsmittel (1.10) ein Klemmverschlusselement (1.12) zur lösbaren Montage des genannten Klemmelements (1.9) an das Klemmverschlusselement (1.12) bereitgestellt wird.

8. Vorrichtung gemäß Anspruch 1 und 7, **dadurch gekennzeichnet, dass** das Klemmverschlusselement (1.12) eine Durchlasshöhlung (1.14) zum Einrasten des Klemmelements (1.9) umfasst.

## Revendications

1. Appareil pour faire rôtir du poulet ou des produits similaires, comprenant un élément chauffant qui peut fonctionner soit au moyen d'éléments à résistance électrique (2.35), soit au moyen d'éléments rayonnants à carburant gazeux (2.22) ; une chambre à rôtir (2.1) comprenant un mécanisme de fixation (1) possédant un élément de serrage (1.9) et un moyen de connexion (1.10), les produits à rôtir étant installés sur celui-ci, **caractérisé en ce qu'**une plaque protectrice (3.2) est pourvue entre l'élément chauffant et la chambre à rôtir (2.1) pour empêcher la vapeur libérée au cours du rôtissage d'endommager l'élément chauffant.

2. Appareil selon la revendication 1, **caractérisé en ce que** la plaque protectrice (3.2) est un panneau en verre.

3. Appareil selon la revendication 1 ou 2, **caractérisé en ce que** la plaque protectrice (3.2) présente une structure circulaire de manière à ce que les distances entre le produit à cuire et la plaque protectrice (3.2) soient toujours égales.

4. Appareil selon l'une quelconque des revendications précédentes, **caractérisé en ce que** la plaque protectrice (3.2) présente une forme de courbe convexe (3.2).

5. Appareil selon l'une quelconque des revendications précédentes, **caractérisé en ce que** la plaque protectrice (3.2) recouvre un point d'échappement (3.5) lorsque l'élément chauffant fonctionne au moyen des éléments rayonnants de carburant gazeux (2.22).

6. Appareil selon l'une quelconque des revendications précédentes, **caractérisé en ce que** la plaque protectrice (3.2) couvre une surface de distribution de la chaleur (3.4) lorsque l'élément chauffant peut fonctionner au moyen des éléments à résistance électrique (2.35).

7. Appareil selon la revendication 1, **caractérisé en ce que** le moyen de connexion (1.10) est pourvu d'une fixation d'élément de serrage (1.12) pour monter de manière détachable ledit élément de serrage (1.9) sur la fixation d'élément de serrage (1.12).

8. Appareil selon la revendication 1 et 7, **caractérisé en ce que** la fixation d'élément de serrage (1.12) comprend une cavité de passage (1.14) pour mettre en prise l'élément de serrage (1.9).
